# EUROPEAN PATENT APPLICATION

(11) **EP 1 048 974 A1**
(43) Date of publication of application: **02.11.2000**
(21) Application number: 99108266.0
(22) Date of filing: 27.04.1999
(51) Int. Cl.: G02F 1/35, G02F 1/37

(54) **Crystal holding device**

(71) Applicant: Kabushiki Kaisha Ushio Sougou Gijyutsu Kenkyusho, Tokyo (JP)
(72) Inventor: Deki, Kyouichi, Mishima-shi, Shizuoka-ken (JP)
(74) Representative: Tomerius, Isabel

(57) **Abstract**

A crystal holding device is provided in which a nonlinear optical crystal (1) with a hygroscopic property such as CLBO, BBO and the like, can be stably used over a long period of time. The nonlinear optical crystal (1) is located in a main holder (2) which is wound with a heater (5) and in a heater bobbin (3). This assembly is located in a housing (10) which is provided with extension flanges (8a,8b) having window components (13a,13b). Thus the space in which the nonlinear optical crystal is located is kept hermetic. This hermetically sealed space is filled with high purity oxygen or a gas mixture of high purity oxygen and a rare gas. Furthermore, a gas inlet and a gas outlet may be provided in the extension flanges. and the oxygen gas or gas mixture delivered to the space in which the nonlinear optical crystal is located. The gas can be continuously or intermittently provided via the gas inlet. In the case of continuous feed of the gas, the two ends of the extension flanges can also be opened without arrangement of the window components.

## Description

### Background of the Invention

### Field of the Invention

The invention relates to a device for restraining a nonlinear optical crystal which emits UV radiation. The invention relates especially to a crystal holding device in which a nonlinear optical crystal with a long service life can be used.

### Description of Related Art

Recently attempts have been made to generate UV light by wavelength conversion using a nonlinear optical crystal and to use it for industrial purposes. Known nonlinear optical crystals which are used for this purpose include CLBO (CsLiB₆O₁₀), LBO (LiB₃O₅), BBO (β-BaB₂O₄), CBO (CsB₃O₅) and the like.

These crystals are hygroscopic. If they are left in air in unaltered form, a hydrate forms on their surface. If light is incident in the nonlinear optical crystal in the state in which there is a hydrate on its surface, a rapid increase of heat occurs, which under certain circumstances causes damage such as cracks and the like.

To use a nonlinear optical crystal over a long time, it is therefore usually necessary to place the nonlinear optical crystal in a hermetically sealable holding device and to add certain gases which do not contain water therein.

But conventionally there have been hardly any industrial purposes for which a nonlinear optical crystal has been used. There is, therefore, no publication disclosing a crystal holding device for restraining the nonlinear optical crystal. Furthermore, gases which are to be added to the crystal holding device to prolong the service life of the nonlinear optical crystal, have not been described.

### Summary of the Invention

The invention was devised to eliminate the aforementioned defect in the prior art. Therefore the object of the invention is to devise a crystal holding device in which a nonlinear optical crystal with a hygroscopic property such as CLBO, BBO and the like can be stably used over a long time.

As was described above, nonlinear optical crystals such as CLBO, LBO, BBO, CBO and the like have a hygroscopic property. If these crystals are left in the air in unaltered form, a hydrate forms on their surface which renders the crystals useless.

The inventors have therefore attempted to place a CLBO crystal in a hermetically sealable crystal holding device and to produce and use a crystal holding device which is filled with high purity nitrogen gas to keep the CLBO crystal in an atmosphere with low moisture content.

When using a crystal holding device which is filled with high purity nitrogen gas, for example for a wavelength conversion device, on which double waves of light emitted by a Nd:YAG laser device are incident, and which emits the fourth harmonic wave (266 nm) therefrom, it was, however, found that the rear face of the CLBO crystal has become rough over the period of operation, and that the intensity of the Nd:YAG fourth harmonic wave diminished over the course of operation.

Next, the crystal holding device was filled with high purity argon gas and the Nd:YAG fourth harmonic wave emitted likewise in the above described manner. But also in this case, over the course of operation, the intensity of the Nd:YAG fourth harmonic wave decreased. Therefore, in addition, the crystal holding device was filled with high purity oxygen gas and the Nd:YAG fourth harmonic wave emitted likewise in the above described manner.

When the crystal holding device was filled with high purity oxygen gas in the above described manner, it became possible to use the CLBO crystal for a long time without reducing the intensity.

Although the reason for this beneficial effect is not clear, it can be surmised that one factor is that the oxygen (O) as a component of the CLBO crystal emerges from the nonlinear optical crystal. The nonlinear optical crystal, such as CLBO and the like, does originally contain oxygen. Therefore the oxygen may be removed more and more frequently from the crystal when Nd:YAG fourth harmonic waves are being formed until it leaves the crystal.

Furthermore, the CLBO crystal was exposed to a space with a moisture content which was kept low (at most 35%). In this state, the Nd/YAG fourth harmonic waves were likewise emitted in the above described manner. In doing so, no reduction of the light intensity was ascertained, as was the case when high purity oxygen gas was added.

In addition, in the case of a gas mixture of oxygen and the rare gas, the same effect is obtained.

In any case, the deterioration of the intensity of the CLBO crystal is reduced when the crystal holding device is filled with oxygen. Furthermore, in the case of a mixture of oxygen and rare gas, the same effect is also achieved.

This same effect is also obtained using a hermetically sealable crystal holding device including a gas inlet and a gas outlet, and oxygen or a mixture of oxygen and rare gas is intermittently supplied from the gas inlet instead of adding oxygen.

When a partially open crystal holding device is used, this same effect can be obtained by always supplying oxygen, or the above described gas mixture, from the gas inlet and by filling the crystal holding device with oxygen in the vicinity of the crystal.

In the case of supplying oxygen or the above described gas mixture from the gas inlet, it is a good idea to place the gas inlet on the side from which the UV radiation of the CLBO crystal is emitted. The reason for this is to effectively protect the rear face of the CLBO crystal (the side from which the UV radiation is emitted) from becoming rough over the course of operation.

It can be imagined that the above described circumstances can be used not only for a CLBO crystal, but also for a nonlinear optical crystal with a hygroscopic property which is generally described using the chemical formula MₓN_{y} (B₃O₅)_{z}, such as the above described LBO, BBO, CBO crystals and the like. Here M and N are symbols of chemical elements such as Cs, Li and the like, and x, y and z are values of integers. If, for example, M = Cs, N = Li, x = y = 1, z = 2, then Cs Li B₆ O₁₀ (CLBO) is described.

Based on the above description, the object of the invention is achieved as follows:
(1) In a hermetically sealable holding device containing a nonlinear optical crystal of MₓN_{y} (B₃O₅)_{z} which emits UV radiation, pure oxygen or a mixture of oxygen and rare gas is added.
(2) In a holding device containing a nonlinear optical crystal of MₓN_{y} (B₃O₅)_{z} which emits UV radiation, a gas inlet and a gas outlet are provided on the side on which UV radiation is emitted from the above described nonlinear optical crystal. Pure oxygen, or a mixture of oxygen and a rare gas, is continuously supplied from this gas inlet.
(3) In a hermetically sealable holding device for a nonlinear optical crystal of MₓN_{y} (B₃O₅)_{z} or BBO which emits UV radiation, a gas inlet and a gas outlet are provided on the side on which UV radiation is emitted from the above described nonlinear optical crystal. Pure oxygen, or a mixture of oxygen and a rare gas, is intermittently supplied from this gas inlet.

The invention is further described using several embodiments shown in the drawings.

### Brief Description of the Drawings

Figure 1 shows a schematic of the arrangement of a first embodiment of the crystal holding device of the present invention;
Figure 2 shows a schematic of one example of the arrangement when using a crystal holding device in the first embodiment for wavelength conversion;
Figure 3 shows a graph of the intensity over time when only argon gas is added and when high purity oxygen gas is added in a crystal holding device;
Figure 4 shows a schematic of the arrangement of a second embodiment of the crystal holding device of the present invention;
Figure 5 shows a schematic of the arrangement of a third embodiment of the crystal holding device of the present invention;
Figure 6 (a) through (d) each show a schematic of one preferred version of the second embodiment; and
Figure 7 (a) through (c) show a schematic of one preferred version of the third embodiment.

### Detailed Description of the Invention

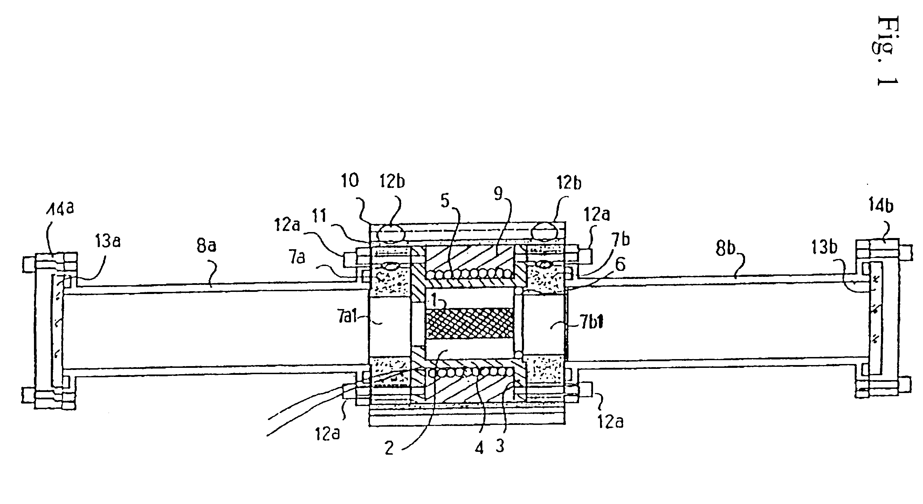

Figure 1 is a schematic cross section of the arrangement of a first embodiment of the crystal holding device of the present invention showing a CLBO crystal, indicated at 1, which is located in a pure aluminum main holder 2.

The CLBO crystal 1 is inserted into the concave area of the main holder 2, clamped by means of a leaf spring or the like not shown in the drawings, and restrained such that it does not move in the main holder 2. The two ends of the concave area are open; from one end light being incident on the CLBO crystal 1 and light being emitted from the other end.

Furthermore, a generally cylindrical heater bobbin 3 of pure aluminum is provided. The outside periphery of heater bobbin 3 is provided with a thermocouple 4 for temperature measurement control which is wound with a heater 5 for heating of the CLBO crystal. The heater 5 consists of a chromium nickel wire or the like which is coated with an insulation material.

The main holder 2, in which the CLBO crystal 1 is located, is inserted into the heater bobbin 3 and is attached with an O-ring 6 in the heater bobbin 3. On the two ends of the heater bobbin 3, flanges for evacuation are formed. The surfaces on which the evacuation flanges and heat insulating spacers 7a, 7b are in contact with one another are kept hermetic.

The heat insulating spacers 7a, 7b consist of a machinable ceramic having a heat insulating effect. The centers of the heat insulating spacers 7a, 7b are each provided with openings 7a1, 7b1 for passing light therethrough. Evacuation flanges are formed on the two ends of the heat insulating spacers 7a, 7b. The surfaces on which the spacers are in contact with the evacuation flanges of the heater bobbin 3 are kept hermetic, as was described above. Furthermore, the surfaces on which the spacers are in contact with the extension flanges 8a, 8b, described below, are kept hermetic.

The outside of the heater 5 is wound with a heat insulating material 9. The thickness of heat insulating material 9 is selected such that its outside diameter is essentially equal to the outside diameter of heat insulating spacers 7a, 7b.

The heater bobbin 3 into which main holder 2 is inserted, the heat insulation material 9 and the heat insulation spacers 7a, 7b, are inserted into a cylindrical heat insulating spacer 11 which consists of a thin fluororesin. These components are placed in a housing 10 which consists of a machinable ceramic. A fluororesin is outstanding as a heat insulating material and enables heating of the CLBO crystal 1 with high efficiency. The housing 10, the heat insulating spacers 7a, 7b and the cylindrical heat insulating spacer 11 are attached integrally by screws 12b which are positioned in the corner regions on the top of the housing.

The cylindrical extension flanges 8a, 8b which penetrate the heat insulating spacers 7a, 7b are connected to the two ends of the heat insulating spacers 7a, 7b and are attached by stop screws 12a which reach to the heater bobbin 3. The extension flanges 8a, 8b are formed from a machinable ceramic. The surfaces on which they are in contact with the heat insulating spacers 7a, 7b are kept hermetic, as was described above. The other ends of the extension flanges 8a, 8b are each provided with a front window 13a and a rear window 13b. These windows consist of synthetic fused silica glass and their surfaces are provided with an antireflex film. The front window 13a and rear window 13b are hermetically attached by window supports 14a, 14b in the extension flanges 8a, 8b.

In the crystal holding device of this embodiment, as described above, hermetic spaces are formed by the extension flanges 8a, 8b, the front window 13a, the rear window 13b, the heat insulating spacers 7a, 7b and the heater bobbin 3. These spaces are filled with high purity oxygen gas.

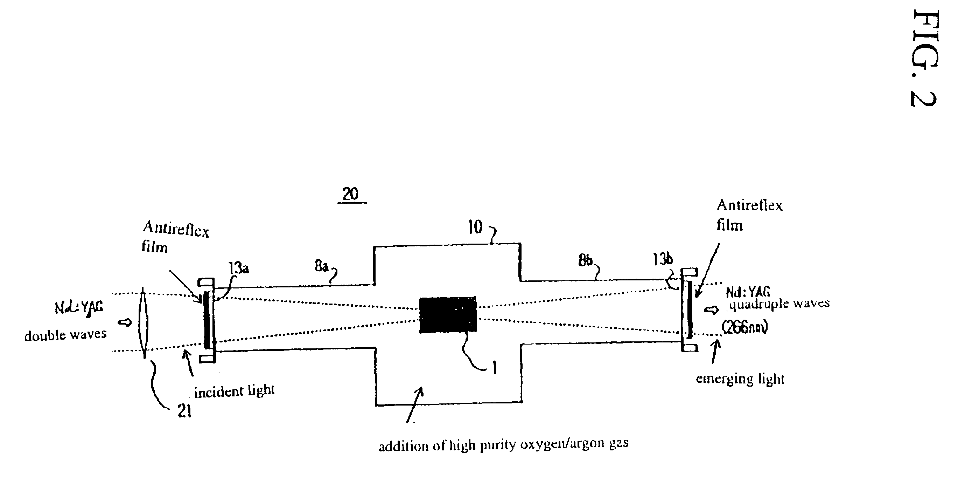

Figure 2 is a schematic of one example of this embodiment of the crystal holding device when used for wavelength conversion. A crystal holding device 20 is provided in this embodiment in which the CLBO crystal 1 is located. The CLBO crystal 1 is heated by the above described heater 5 and is subject to temperature control. Furthermore, a focussing lens 21 is provided on which double waves of light, which emerge from a Nd:YAG laser device (not shown in the drawing), are incident. The light which has emerged from the focussing lens 21 is incident on the crystal holding device 20 from the front window 13a of the extension flange 8a. The light which has been incident on the crystal holding device 20 is focussed in the vicinity of the middle of the CLBO crystal 1 and is subjected to wavelength conversion by the CLBO crystal 1. The fourth harmonic wave (266 nm) of the light which emerges from the Nd:YAG laser device emerges from the rear window 13b of the extension flange 8b.

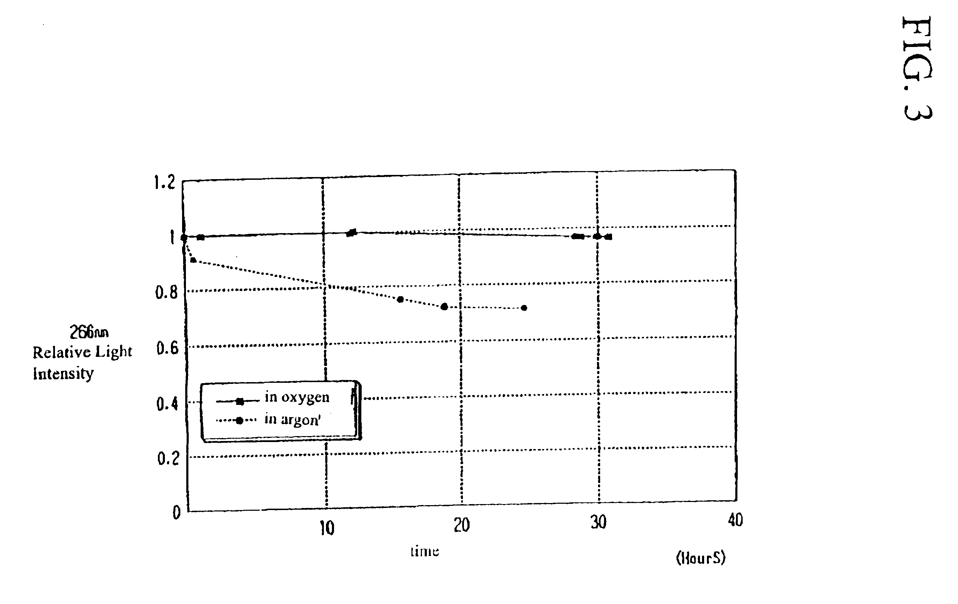

Figure 3 is a schematic of the light intensity of the crystal holding device 20 when the latter is filled solely with argon gas and when it is filled with high purity oxygen gas; the filling pressure of the argon gas and the oxygen gas being 1 atm. The x-axis plots the time (hours), while the y-axis plots the relative intensity of the above described light at 266 nm, wherein the intensity at a transpired time of 0 is labelled 1 for filling with oxygen gas or argon gas.

As is apparent from the drawings, in the case of adding argon gas, a reduction of the intensity is ascertained. However, hardly any reduction of the intensity was found with the addition of high purity oxygen gas.

The result relates to a test in which the crystal holding device 20 was filled with argon or high purity oxygen gas. However, when a rare gas, such as argon or the like, is mixed with oxygen gas, the same effect is obtained as when high purity oxygen gas is added. Specifically, in the case in which argon and oxygen gas are mixed with one another at a mixing ratio of 3:1, it was confirmed that the same effect is obtained. It can be assumed that the same effect is obtained until the mixing ratio of the rare gas to pure oxygen is roughly 5:1.

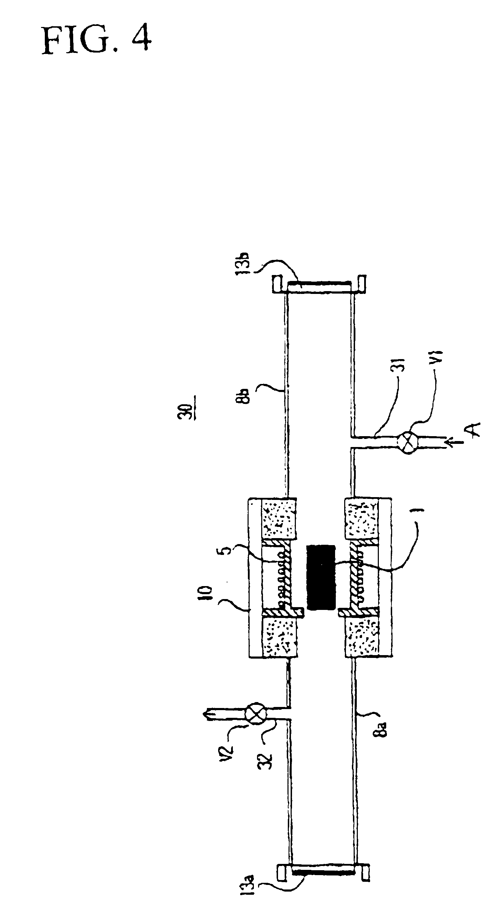

Figure 4 is a schematic of the arrangement of a second embodiment of the crystal holding device of the invention. In this embodiment, the crystal holding device, as shown in Figure 1, also contains a gas inlet 31 and a gas outlet 32. In this case, high purity oxygen gas or a gas mixture of rare gas and oxygen gas is supplied uninterruptedly or intermittently from the gas inlet 31. The details and parts of the crystal holding device have the same arrangements as the parts in Figure 1. As shown in Figure 4, crystal holding device 30 is provided in which the CLBO crystal 1 is located. The CLBO crystal 1 is heated by the heater 5 and is subjected to temperature control. In the extension flange 8b on the rear side (on the light exit side) of the crystal holding device 30, gas inlet 31 is provided with a distribution valve V1. In the extension flange 8a on the front side (on the light inlet side) of the crystal holding device 30, gas outlet 32 is provided with a distribution valve V2. With uninterrupted feed of oxygen gas or the gas mixture, the distribution valves V1 and V2 are always open, thereby continuously delivering oxygen gas or the gas mixture from the gas feed opening A of the gas inlet 31 to the crystal holding device.

With intermittent feed of oxygen gas or the gas mixture, the opening and closing of the distribution valves V1 and V2 are synchronously repeated with one another each time with a constant duration. The oxygen gas or gas mixture, which is supplied from the gas feed opening A of the gas inlet 31, is intermittently delivered to the crystal holding device.

When a crystal holding device is used in this embodiment for wavelength conversion, as was described above using Figure 2, a focussing lens is provided in front of the front window 13a. Double waves of the light, which emerge from a Nd:YAG laser device (not shown in the drawing), are incident from the front window 13a of the extension flange 8a via the focussing lens on the crystal holding device 30. The light incident on the crystal holding device 30 is focussed in the vicinity of the middle of the CLBO crystal 1 and is subjected to wavelength conversion by means of the CLBO crystal 1. The fourth harmonic wave (266 nm) of the light which emerges from the Nd:YAG laser device, emerges from the rear window 13b of the extension flange 8b.

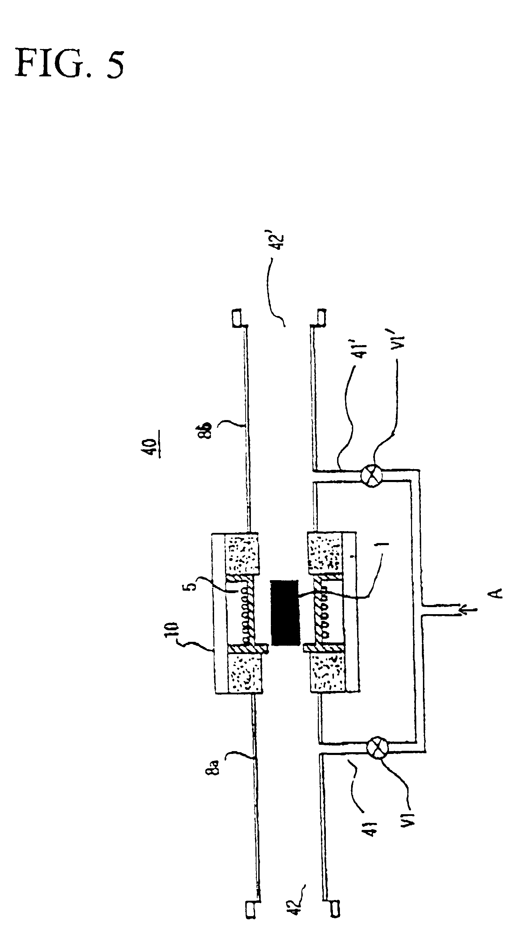

Figure 5 is a schematic of the arrangement of a third embodiment of the crystal holding device of the present invention. In this embodiment, the front window 13a and the rear window 13b, as shown in Figure 1 and 4, are removed. Also, the front side (light inlet side) and the rear side (light outlet side) of the crystal holding device are opened. In addition, in the extension flange 8a on the front side and in the extension flange 8b on the rear side, there is one gas inlet each. The parts and details of the crystal holding device not shown in Figure 5 are the same as the parts in Figure 1.

In Figure 5, a crystal holding device 40 is provided in which the CLBO crystal is located. The CLBO crystal 1 is heated by the heater 5 and is subjected to temperature control. In the extension flanges 8a, 8b, on the front side (light inlet side) and the rear side (light exit side), respectively, of the crystal holding device 40, there are respective gas inlets 41, 41' in which respective distribution valves V1, V1' are located. The two ends of the extension flanges 8a, 8b are open. The oxygen or gas mixture which is supplied from the gas feed opening A is discharged from openings 42, 42' on the two ends of the extension flanges 8a, 8b to the outside.

In this embodiment, on the front side and the rear side of the CLBO crystal, there are gas inlets 41, 41', as was described above. The distribution valves V1, V1' are always open, and oxygen gas or the gas mixture is supplied to the front side and the rear side of the CLBO crystal without interruption. In this way, the vicinity of the CLBO crystal can be filled with the oxygen gas or gas mixture, even if the two ends of the extension flanges 8a, 8b are open. Thus the CLBO crystal can be protected from moisture and its service life extended.

When the crystal holding device of this embodiment is being used for wavelength conversion, light can be incident on the crystal holding device 40 from the opening 42 on the front side of the extension flange 8a, as in the second embodiment. The light subjected to wavelength conversion by means of the CLBO crystal 1 emerges from the opening 42 on the rear side of the extension flange 8b.

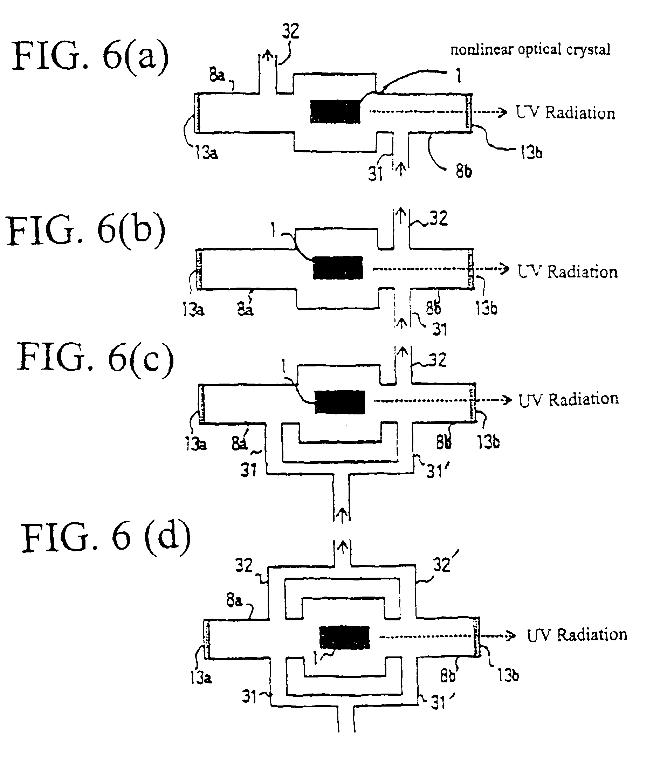

The arrangement of the gas inlet and the gas outlet can be varied in different ways, as is described below. Figures 6 (a) to (d) each show schematically one example of the arrangement of the gas inlet and the gas outlet in the case of hermetic sealing of the crystal holding device. Figure 6 (a) shows the arrangement of the gas inlet 31 and the gas outlet 32 as shown in Figure 4. Figure 6 (b) shows an example in which the gas inlet 31 and the gas outlet 32 are located in the extension flange 8b on the rear face (light exit side). Figure 6 (c) shows an example in which the gas inlets 31, 31' are located in the extension flanges 8a, 8b on the front face and the rear face, and the gas outlet 32 is located in the extension flange 8b on the rear face. Figure 6 (d) shows one example in which the gas inlets 31, 31' and the gas outlets 32, 32' are located in the extension flanges 8a, 8b on the front face and the rear face.

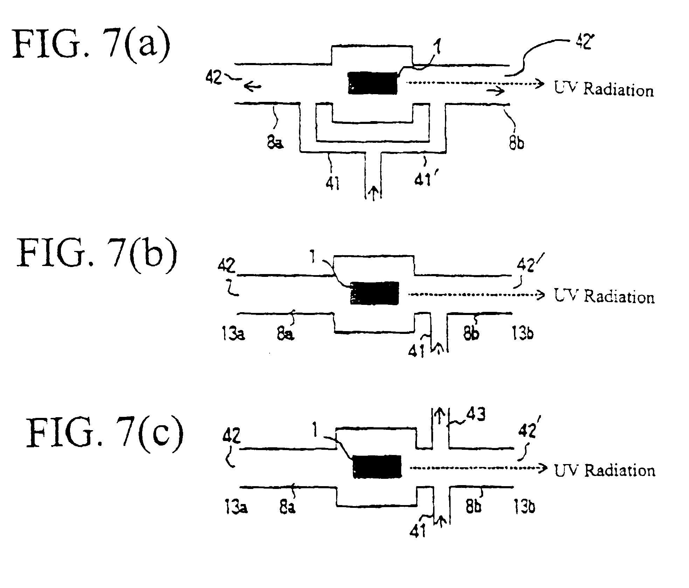

Figure 7 (a) to (c) each show schematically one example of the arrangement of the gas inlet and the gas outlet in the case in which the two ends of the extension flanges 8a, 8b of the crystal holding device are open. Figure 7 (a) shows the arrangement of the gas inlets 41, 41' as shown in Figure 5. The supplied gas is discharged from the openings 42, 42' on the two ends of the extension flanges 8a, 8b. Figure 7 (b) shows a case in which the gas inlet 41 is located in the extension flange 8b on the rear side (light exit side) and the supplied gas is discharged from the openings 42, 42' on the two ends of the extension flanges 8a, 8b. Figure 7 (c) illustrates an embodiment for the arrangement as shown in Figure 7 (b) in which a gas outlet 43 is located in the extension flange 8b on the rear face (light exit side).

As is apparent from Figure 6 (a)-(d) and Figure 7 (a)-(c), by placing the gas inlet at least in the extension flange 8b on the rear face (light exit side), new gas can be supplied to the rear face of the nonlinear optical crystal (the side from which the UV radiation is emitted) and the entire rear face can be effectively protected against becoming rough over the course of operation.

In the above described examples, an embodiment in which the two ends of the extension flanges 8a, 8b are closed and an embodiment in which the two ends are open were shown. However, an arrangement is also possible in which one end of the extension flange 8a, 8b at a time is closed and the other end thereof is open.

As was described above, the present invention provides a holding device including a nonlinear optical crystal of MₓN_{y} (B₃O₅)_{z} which emits UV radiation. The holding device is filled with pure oxygen or a gas mixture of oxygen and rare gas which may be supplied from the outside. This measure can lengthen the service life of a nonlinear optical crystal with a hygroscopic property and can suppress the reduction of light intensity of the crystal holding device.

Furthermore, in the case of an arrangement having a gas inlet, the gas inlet is located at least on the side on which UV radiation is emitted from the nonlinear optical crystal. This measure can effectively protect the entire rear face from becoming rough due to UV radiation.

## Claims

1. A holding device for a nonlinear optical crystal of MₓN_{y} (B₃O₅)_{z} which emits UV radiation, comprising:
a hermetically sealable space filled with at least one of pure oxygen and a gas mixture of oxygen and rare gas.

2. A holding device for a nonlinear optical crystal of β-BaB₂O₄ (BBO) which emits UV radiation, comprising:
a hermetically sealable space filled with at least one of pure oxygen and a gas mixture of oxygen and rare gas.

3. A holding device according to claim 1 or 2, comprising a hermetically sealed space containing the nonlinear optical crystal, and a gas inlet and a gas outlet both connected to said hermetically sealed space, said gas inlet being located at least on a side of the holding device on which UV radiation is emitted from the nonlinear optical crystal, wherein at least one of pure oxygen and a gas mixture of oxygen and a rare gas is continuously supplied from said gas inlet.

4. A holding device according to claim 1 or 2, comprising a hermetically sealed space containing the nonlinear optical crystal, and a gas inlet and a gas outlet both connected to said hermetically sealed space, said gas inlet being located at least on a side of the holding device on which UV radiation is emitted from the nonlinear optical crystal, wherein at least one of pure oxygen and a gas mixture of oxygen and a rare gas is intermittently supplied from said gas inlet.

5. A holding device of any one of claims 1 to 4, wherein the gas mixture contains rare gas and oxygen in a volumetric ratio of 3:1 to 5:1.
